(19) 

**Europäisches Patentamt**
**European Patent Office**
**Office européen des brevets**

(11) **EP 2 108 620 A1**

(12) **EUROPEAN PATENT APPLICATION**

(43) Date of publication:
**14.10.2009 Bulletin 2009/42**

(51) Int Cl.:
*C01G 23/00* (2006.01)   *C04B 35/468* (2006.01)
*H01G 4/12* (2006.01)

(21) Application number: **08103388.8**

(22) Date of filing: **04.04.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Evonik Degussa GmbH**
**45128 Essen (DE)**

(72) Inventors:
• **Vormberg, Reinhard, Dr.**
  **63543 Neuberg (DE)**
• **Menzel, Frank, Dr.**
  **63456 Hanau-Steinheim (DE)**

(54) **A method to produce barium titanate powder from pyrogenic titanium dioxide**

(57)     A method to produce a barium titanate powder having a BET surface area of 10 to 25 m²/g comprising
- mixing a barium carbonate powder having a BET surface area of 20 to 50 m²/g and a pyrogenic titanium oxide powder having a BET surface area of 40 to 150 m²/g in a ratio to form a powder mixture
- milling the powder mixture,
- calcining the powder mixture in a temperature range from 700°C to 800°C.

EP 2 108 620 A1

**Description**

The invention relates to a method to produce barium titanate powder from pyrogenic titanium dioxide.

Barium titanate, $BaTiO_3$, is the ceramic material most widely used in the electronic industry. It finds extensive application as a dielectric in the capacitor industry for the fabrication of multilayer ceramic capacitors (MLCCs) due to its high relative dielectric constant and low losses.
The most important innovation in the MLCC industry in recent times has been the change from the expensive noble-metal electrodes (palladium-silver alloys) to base metal electrodes (nickel and copper) made possible by a new sintering technology under controlled oxygen partial pressure. The evolution of the MLCCs technology has occurred in two primary directions: the fabrication of smaller-sized devices (miniaturization) and the increase of capacitance.

The current trend of the number of dielectric layers and the thickness of dielectric layers indicates that layers thinner than 1 $\mu$m and capacitors with a number of layers exceeding 1000 will be available in a near future. Fabrication of these thin dielectric layers by tape casting requires fine and highly disperse powders. The presence of large aggregates can produce defects in the green tape and an increased number of discarded devices.

At present, $BaTiO_3$ powders for the capacitor industry are produced according to three different routes:

(1) solid-state reaction between $BaCO_3$ and $TiO_2$;
(2) thermal decomposition of barium titanyl oxalate obtained by addition of oxalic acid to a solution of metal chlorides or nitrates;
(3) hydrothermal synthesis using aqueous $Ba(OH)_2$ or $BaCl_2$ as barium precursors and $TiO_2$ or $TiCl_4$ as well as Ti-Alkoxide as titanium source.

The solid-state process was the first one used for the production of $BaTiO_3$ powders. Main drawback was the high calcination temperature (1100°C) resulting in coarse and aggregated powders. Advantages of the solid-state route are the good control of the Ba/Ti ratio in the final powder (the Ba/Ti ratio can be controlled with a precision of the order of 0.1% just by carefully weighing the parent oxides), the lower cost, the high density and tetragonality of the particles. Yet, powders produced by a solid-state process are still not competitive with high-quality hydrothermal powders.

It is therefore an object of the present invention to provide a solid-state process for the production of BaTiO3 powder that overcomes the disadvantages of the known solid-state processes, resulting in high-quality powders.

The present invention provides a method to produce a barium titanate powder having a BET surface area of 10 to 25 $m^2$/g comprising

- mixing a barium carbonate powder having a BET surface area of 20 to 50 $m^2$/g and a pyrogenic titanium oxide powder having a BET surface area of 50 to 120 $m^2$/g in a ratio to form a powder mixture
- milling the powder mixture,
- calcining the powder mixture in a temperature range from 700°C to 800°C.

Pyrogenic is understood to include flame oxidations or flame hydrolyses processes. In flame oxidation a titanium dioxide precursor, for example titanium tetrachloride, is oxidised with oxygen according to equation 1a. In flame hydrolysis the formation of titanium dioxide is effected by hydrolysis of the titanium dioxide precursor, the water necessary for the hydrolysis being derived from the combustion of a fuel gas, for example hydrogen, and oxygen (equation 1b).

$$TiCl_4 + O_2 \rightarrow TiO_2 + 2\, Cl_2 \qquad \text{(equation 1a)}$$

$$TiCl_4 + 2\, H_2O \rightarrow TiO_2 + 4\, HCl \qquad \text{(equation 1b)}$$

In a special embodiment the primary particle distribution of the pyrogenic titanium dioxide powder has a half width HW, in nanometers, of

$$\mathrm{HW\ [nm]\ =\ a\ x\ BET}^f,$$

where a = 670x10^{-9} $m^3$/g and $-1.3 \le f \le -1.0$.

The term primary particles in the context of the invention is understood to denote titanium dioxide particles that are first of all formed in the reaction and that can coalesce to form aggregates during the further course of the reaction.

The term aggregate within the context of the invention is understood to denote primary particles of similar structure and size that have coalesced together, and whose surface is smaller than the sum of the individual, isolated primary particles. Several aggregates or also individual primary particles may combine together further to form agglomerates. Aggregates or primary particles accordingly lie adjacent to one another in the form of point objects. Depending on their degree of coalescence, agglomerates may be broken up by application of energy.

The mean half width HW of the primary particle distribution (in numerical terms) is obtained by image analysis of the TEM photographs. The mean half width is a function of the

BET surface area with a constant f, where $-1.3 \leq f \leq -1.0$.

Preferably the half width may lie in the range $-1.2 \leq f \leq -1.1$.

For a titanium dioxide powder with a BET surface area of 40 to 60 $m^2/g$, the 90% spread of the number distribution of the primary particle diameters may lie between 10 and 100 nm. As a rule the 90% spread of the number distribution of the primary particle diameters is between 10 and 40 nm.

Furthermore, the equivalent circular diameter of the aggregates (ECD) of such a pyrogenic titanium dioxide powder may be less than 80 nm.

The mean aggregate area of the pyrogenic titanium dioxide powder with a BET surface area of 40 to 60 $m^2/g$ may be less than 6500 $nm^2$ and the mean aggregate circumference may be less than 450 nm.

In addition the BET surface area of the pyrogenic titanium dioxide powder may lie in a range from 80 to 120 $m^2/g$. A range of 85 to 95 $m^2/g$ may be particularly preferred.

For the pyrogenic titanium dioxide powder with a BET surface area between 80 and 120 $m^2/g$, a 90% spread of the number distribution of the primary particle diameters may have values between 4 and 25 nm. Furthermore, such a titanium dioxide powder may have an equivalent circular diameter of the aggregates (ECD) of less than 70 nm.

The mean aggregate area of the pyrogenic titanium dioxide powder with a BET surface area of 80 to 120 $m^2/g$ may be less than 6000 $nm^2$ and the mean aggregate circumference may be less than 400 nm.

The proportion of aggregates and/or agglomerates of the titanium dioxide powder with a diameter of more than 45 $\mu$m lies in a range from 0.0001 to 0.05 wt.%. A range from 0.001 to 0.01 wt.% may be preferred, and a range from 0.002 to 0.005 wt.% may be particularly preferred.

It is the high BET surface area, the narrow distribution of the primary particle distribution and the low proportion of aggregates with a diameter of more than 45 $\mu$m that are relevant for the positive properties of the pyrogenic titanium dioxide powder for the production of barium titanate.

In another embodiment the pyrogenic titanium dioxide is part of an aqueous dispersion.

This dispersion is preferably obtainable by

-   placing in water the pyrogenic titanium dioxide powder, at least one amino alcohol and at least one carboxylic acid from the group comprising dibasic carboxylic acids and/or hydroxycarboxylic acids

-   producing a pre-dispersion by introducing energy in an amount of less than 200 kJ/$m^3$ and then producing a dispersion in which the pyrogenic titanium dioxide powder has a mean, volume-related aggregate diameter of less than 150 nm by grinding the pre-dispersion by means of a high-energy mill at a pressure of at least 500 bar.

The amount of pyrogenic titanium dioxide is preferably at least 20 wt.% titanium dioxide, the amino alcohol is preferably present in the dispersion in an amount of from 2.5 to 7.0 $\mu$mol/$m^2$ specific surface area $TiO_2$ and the carboxylic acid being present in an amount of from 1.0 to 3.5 $\mu$mol/$m^2$ specific surface area $TiO_2$.

It may be particularly advantageous if the mean, volume-related aggregate diameter is less than 100 nm and no particles greater than 200 nm are detectable in the dispersion according to the invention by the conventional methods of light scattering for determining particle size distributions in dispersions, such as, for example, dynamic (e.g. Malvern Zetasizer) or random light scattering (e.g. Horiba LA-910).

The amino alcohols in the dispersion according to the invention are preferably selected from the group comprising monoethanolamine, diethanolamine, triethanolamine, monoisopropanolamine, diisopropanolamine, triisopropanolamine, N,N-dimethylisopropanolamine, 3-amino-1-propanol, 1-amino-2-propanol and/or 2-amino-2-methyl-1-propanol, particular preference being given to 2-amino-2-methyl-1-propanol.

The carboxylic acids in the dispersion according to the invention are preferably selected from the group comprising the dibasic carboxylic acids or hydroxycarboxylic acids oxalic acid, malonic acid, succinic acid, glutaric acid, adipic acid, maleic acid, fumaric acid, lactic acid, malic acid, tartaric acid and/or citric acid, citric acid being particularly preferred.

In the dispersion according to the invention, the content of amino alcohol and of at least dibasic carboxylic acid or hydroxycarboxylic acid is from 2.5 to 7.0 $\mu$mol./$m^2$ specific surface area $TiO_2$ for amino alcohol and from 1.0 to 3.5 $\mu$mol./$m^2$ specific surface area $TiO_2$ for the carboxylic acid. In a preferred embodiment, the content of amino alcohol and of at least dibasic carboxylic acid or hydroxycarboxylic acid may be from 3.3 to 5.0 $\mu$mol./$m^2$ specific surface area $TiO_2$ for amino alcohol and from 1.5 to 2.5 $\mu$mol./$m^2$ specific surface area $TiO_2$ for the carboxylic acid.

The dispersion according to the invention may preferably have a content of titanium dioxide powder in the dispersion of from 25 to 50 wt.%.

Another object of the invention is a capacitor comprising the barium titanate obtained by the process according to the invention.

**Experimental**

Stoichiometric quantities of

- nanocrystalline $TiO_2$ (grades AEROXIDE® $TiO_2$ P 25 and VP $TiO_2$ P 90, Evonik Degussa GmbH, Hanau, Germany),
- ultrafine $BaCO_3$ (BC1, Solvay Bario e Derivati, Massa, Italy) and
- submicron $BaCO_3$ (BC2, Solvay Bario e Derivati, Massa, Italy)
  were intensively mixed in aqueous suspension for 24h using polyethylene jars and zirconia media.

A solution of ammonium polyacrylate was prepared by titrating an aqueous solution of polyacrylic acid (Acros Chimica, Milan, Italy, MW 2000) up to pH 10 and added as dispersant. The concentration of polymer was that required to have formation of a monolayer on the particle surface.

The titania powders are composed of equiaxed single-crystal nanoparticles which form branched, open aggregates. These aggregates can be easily crushed by milling.

Barium carbonate consists of acicular nanocrystals (BC1) or elongated particles (BC2).

The properties of the raw materials are reported in Table 1. Three different mixtures, denoted as

- BT1 (AEROXIDE® $TiO_2$ P 25+BC1),
- BT2A (VP $TiO_2$ P 90+BC1) and
- BT2B (VP $TiO_2$ P 90+BC2), were prepared.

Table 1: Properties of raw materials.

|  | Phase composition | Specific surface area (m²/g) | Equivalent BET diameter (nm) | $d_{50}$[a] (μm) | Crystal Size[b] (nm) |
|---|---|---|---|---|---|
| AEROXIDE®$TiO_2$P 25 | 80% anatase, 20% rutile | 55.1 | 28 | 0.2 | 22 |
| VP $TiO_2$ P 90 | Predominantly anatase | 100.9 | 16 | - | 14 |
| BC1 | Whiterite | 27.6 | 54 | 0.12 | - |
| BC2 | Whiterite | 2.9 | 482 | - | - |
| [a] measured by Horiba LA910 particle analyzer; [b] Crystal size calculated from the broadening of the XRD peaks by Scherrer equation. | | | | | |

After wet mixing the powders were freeze-dried and sieved. The homogeneity of the mixtures was evaluated on fracture surfaces of green bodies (obtained by cold isostatic pressing) using scanning electron microscopy (SEM).

$BaCO_3$ and $TiO_2$ have a very different gray contrast in the back-scatter (BS) electron mode and agglomerates bigger than 1-2 μm can be easily distinguished. The level of mixing was good for all mixtures within the limits of the above method.

The non-isothermal kinetics of the reaction between $TiO_2$ and $BaCO_3$ was studied by means of simultaneous thermogravimetric and differential thermal analysis (TG/DTA, Setaram LabSys, Caluire, France). The mixtures were heated up to 1300 °C at 5°C/min.

Isothermal TG measurements were carried out at three different temperatures: 600, 650 and 700°C. The samples were rapidly heated (20°C/min) at the reaction temperature and then kept at constant temperature for 24h.

Both TG experiments were performed under a 0.1 L min⁻¹ flow of dry air at a pressure of 100 kPa (1 atm). The gas was allowed to flow in the apparatus for 30 min before the beginning of each run.

Burn-out of the organic dispersant was accomplished by 4h isothermal hold at 300 or 400°C for 4 h.

The formation of $BaTiO_3$ was also studied in a box furnace using a heating rate of 5°C/min and isothermal hold at different temperatures (400 to 800°C) and times (1 to 8h).

Phase composition of calcined powders was investigated by

X-ray diffraction (XRD, Co Kα radiation, Philips PW1710, Philips, Eindhoven, The Netherlands). Rietveld refinement of the crystal structure and calculation of lattice parameters were performed using the software GSAS-EXPGUI.

The crystal size, $d_{XRD}$, of $BaTiO_3$ calcined powders has been estimated from the broadening of the 111 peak by means of Scherrer equation after correction for instrumental broadening using a silicon standard.

The morphology of the raw materials as well as of the final calcined powders was characterized by scanning electron microscopy (SEM, LEO 1450VP, LEO Electron Microscopy Ltd.,

Cambridge, UK).

Specific surface area, $S_{BET}$, was measured by nitrogen adsorption according to the BET method (Micromeritics ASAP 2010, Micromeritics, Norcross, GA). The density ρ of the powders was measured by helium picnometry (Micromeritics Accupyc 1330). The equivalent BET diameter, $d_{BET}$, was calculated as $d_{BET} = 6/\rho S_{BET}$.

The sintering behaviour of single phase $BaTiO_3$ powders was investigated by dilatometry (Setaram SetSys, Caluire, France) heating ceramic compacts (prepared by cold isostatic pressing) in flowing dry air at 5°C min$^{-1}$ up to 1450°C. Final single phase powders were sintered in air at 1150°C for 1 h using a heating rate of 5°C/min. Green bodies were prepared by cold isostatic pressing at 100 MPa. Neither binders nor sintering aids were added. The density of the resulting ceramics was obtained by Archimedes' method and the grain size determined as the mean intercept length measured on fracture surfaces.

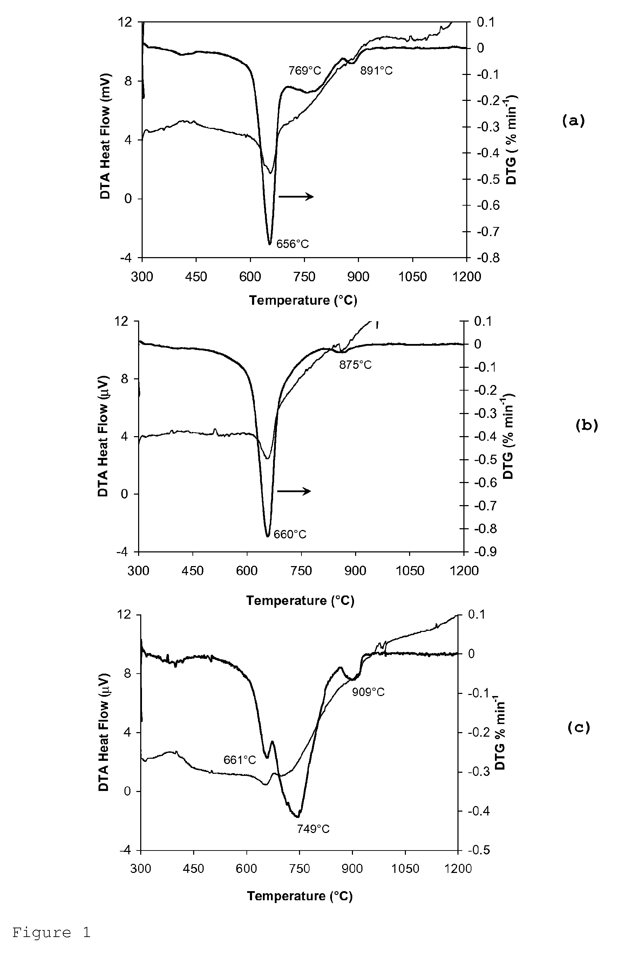

Non-isothermal TG and DTA analysis: The constant heating rate (5°C min$^{-1}$) DTG and DTA curves of mixtures BT1, BT2A and BT2B are reported in Figure 1.

Figure 1 shows the TG and DTA curves of $BaCO_3$-$TiO_2$ mixtures, 5°C min$^{-1}$ Heating rate:

(a) BT1; $d_{BET}(BaCO_3)$: 54nm, $d_{BET}(TiO_2)$: 28nm.
(b) BT2A; $d_{BET}(BaCO_3)$: 54nm, $d_{BET}(TiO_2)$: 16nm.
(c) BT2B; $d_{BET}(BaCO_3)$: 482nm, $d_{BET}(TiO_2)$: 16nm.

The DTG curve corresponds to the first derivative of the weight loss curve. Therefore the presence of more than one peak on the DTG trace indicates different weight loss steps. The position of the DTG peaks well agrees with the position of the DTA peaks. For all mixtures, reaction starts around 500°C. However, the behaviour of BT1 and BT2A shows important differences. For BT1 there are distinct DTG peaks: (i) a first major peak centred at 656°C, (ii) a second minor peak at 769°C.

In contrast, for BT2A, there is practically a single reaction step at 660°C because the second peak is not longer observable.

The above results indicate that non-isothermal formation of barium titanate can occur by a single reaction step when the particle size is reduced below a critical size. This critical size is of the order of 15-20 nm.

The particle size of $BaCO_3$ is also of paramount importance. As reported in Figure 1c, formation of $BaTiO_3$ in mixture BT2B prepared from P90 ($d_{BET}$: 16 nm) and the coarser carbonate BC2 ($d_{BET}$: 0.48 μm) mainly occurs at higher temperatures and at lower rate in comparison to BT1 and BT2A, as indicated by the second DTG peak at 749°C which has become the most important. However, the peak at 660 °C is still present and indicates some reactivity at low temperature.

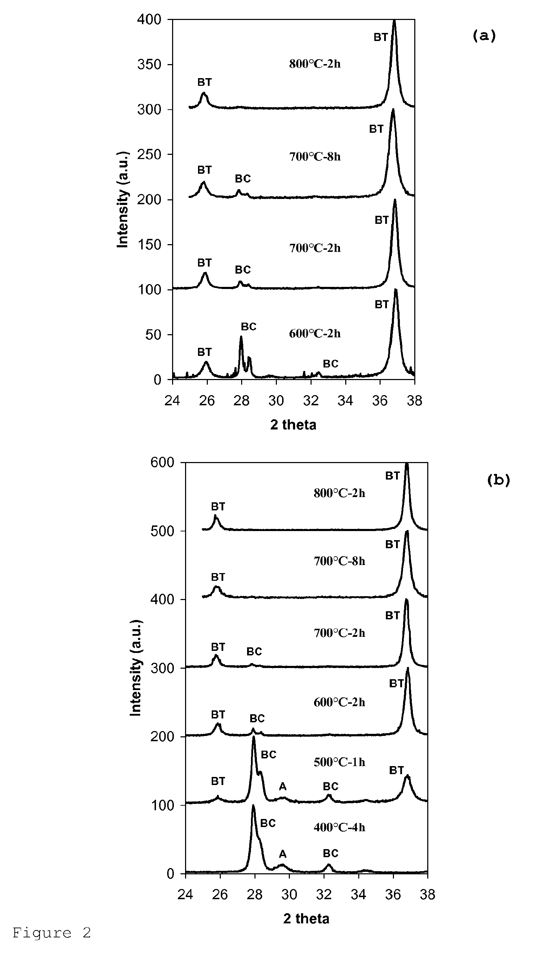

Isothermal kinetics: The XRD patterns of BT1 and BT2A powders calcined at different temperatures from 400 to 800°C are shown in Fig. 2.

Figure 2 shows the XRD patterns (Co Kα radiation) of $BaCO_3$-$TiO_2$ mixtures calcined at different temperatures.

(a) BT1; $d_{BET}(BaCO_3)$: 54nm, $d_{BET}(TiO_2)$: 28nm.
(b) BT2A; $d_{BET}(BaCO_3)$: 54nm, $d_{BET}(TiO_2)$: 16nm.
BT: $BaTiO_3$. BC: $BaCO_3$. A: anatase $TiO_2$.

The angular range 25 to 38°2θ was chosen because the most intense reflections of $BaTiO_3$, $BaCO_3$, $Ba_2TiO_4$ and polytitanates fall in this range. For BT2A, formation of $BaTiO_3$ already starts at 500°C (31% conversion after 1h and 63% after 2h) and a conversion of about 90% is observed after 2h calcination at 600°C.

However conversion of the residual $BaCO_3$ and $TiO_2$ requires at least 8h calcination at 700°C or 2h at 800°C. The solid-state synthesis of single-phase $BaTiO_3$ at a temperature as low as 700°C in the absence of mechanical activation was not reported before.

Formation of single phase $BaTiO_3$ from mixture BT1 (Fig. 2a) requires calcination at 800°C. The above results indicate that the reaction rate in the final stage of the reaction is rather low and strongly dependent on the $TiO_2$ particle size.

It is worth noting that, within the limits of XRD, formation of ternary oxides ($Ba_2TiO_4$, $BaTi_2O_5$, $Ba_6Ti_{17}O_{40}$, etc.) other than $BaTiO_3$ was not observed.

Since formation of $BaTiO_3$ starts at temperatures > 400°C (the XRD pattern of mixture BT2A after 4h calcination at 400°C only shows the peaks of $TiO_2$ and $BaCO_3$, Fig. 2b), the weight $w_0$ of the sample after 4h isothermal stay at 400°C has been considered as reference (i.e. as corresponding to the weight of an equimolar $BaCO_3$-$TiO_2$ mixture no longer containing adsorbed moisture and organic additives). The fraction reacted alpha, defined as the moles of $BaTiO_3$ formed from one mol of $BaCO_3$ and one mol of $TiO_2$ (reactions 1 and 2) was calculated from the weight loss $\Delta w$ (evolved $CO_2$) as alpha = $\Delta w / \Delta w_t$, where $\Delta w_t$ is theoretical weight loss expected for the $BaCO_3$-$TiO_2$ mixture of weight $w_0$.

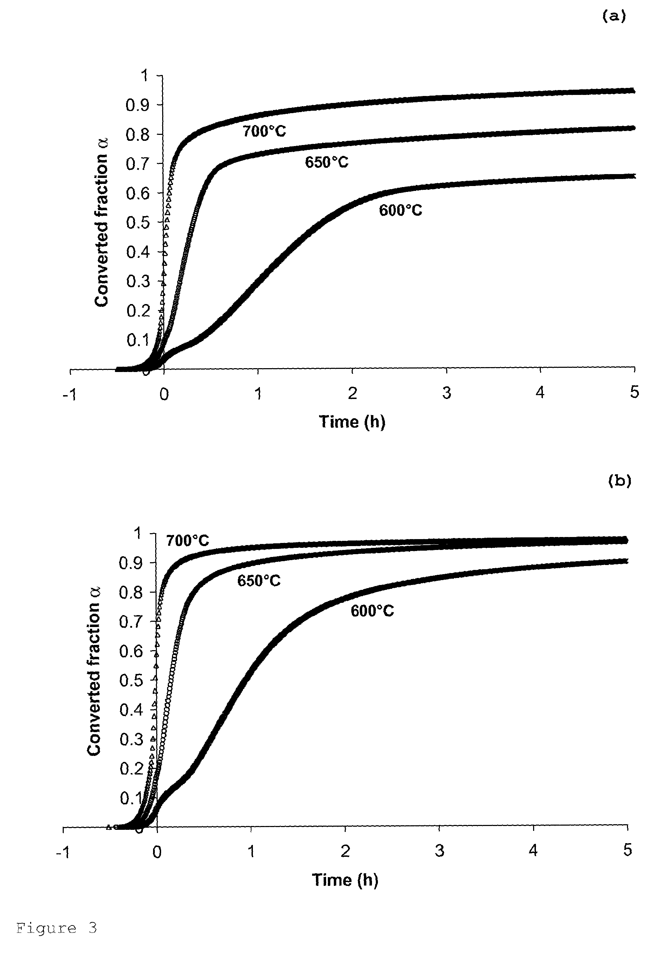

The reacted fraction for mixtures BT1 and BT2A as a function of time is reported in Figure 3.

Figure 3 shows the isothermal reaction kinetics of the $BaCO_3$-$TiO_2$ reaction determined from weight loss measurements.

(a) BT1; $d_{BET}(BaCO_3)$: 54nm, $d_{BET}(TiO_2)$: 28nm.
(b) BT2A; $d_{BET}(BaCO_3)$: 54nm, $d_{BET}(TiO_2)$: 16nm.

The portion of the curves located at negative times corresponds to the non-isothermal reaction regime associated with the heating of the mixture to the preset temperature.

Although the duration of the isothermal treatment was 24h, only the kinetic data up to 5h are shown, because the reaction mostly takes place during the initial hours.

Examination of the kinetic curves indicates a fast reaction at short times, whereas the reaction rates rapidly decline at longer times, in agreement with the XRD results shown in Fig. 2. For BT2A after 8 h reaction, the converted fraction is 99% at 700°C, 97% at 650°C and 93% at 600°C. For BT1 after 8h reaction, the converted fraction is 96% at 700°C, 84% at 650°C and 67% at 600°C.

Since only a modest increase of $\alpha$ is observed after the first hours, the higher final conversion attained for BT2A has to be mainly ascribed to the higher reactivity of this mixture during the initial period.

Powder properties and particle morphology: The properties of single phase barium titanate powders prepared by solid-state reaction are shown in Table 2.

Table 2: Properties of nanocrystalline $BaTiO_3$ powders obtained by solid-state reaction

| Sample | Calcination conditions | $S_{BET}$ (m²/g) | $d_{BET}$ (nm) | Density[a] (g/cm³) | $d_{XRD}$ [b] (nm) | Tetragonality |
|---|---|---|---|---|---|---|
| BT1 | 800°C/2h | 11.9 | 85 | 5.91 (98.3%) | 37.5 | 1.005 |
| BT2A | 700°C/8h | 14.8 | 70 | 5.80 (96.5%) | 32.5 | 1.005 |
| BT2A | 800°C/2h | 12.7 | 80 | 5.87 (97.7%) | 32.7 | - |
| [a] Values in parenthesis correspond to relative densities. Reference density: 6.01 g cm⁻³ | | | | | | |
| [b] Crystal size calculated from the broadening of the XRD peaks by Scherrer equation | | | | | | |

The specific surface area of powders BT1 and BT2A is in the range 11.9 to 14.9 m²/g and the equivalent particle diameter is of 70-85 nm. These values are typical of very fine hydrothermal powders rather than of solid-state powders.

Structure refinement indicates that the powders have tetragonal structure with tetragonality $c/a$ of about 1.005 (*c* and *a* are the lattice parameters). Although lower than the reference value of 1.01 measured on coarse solid-state powders (particle size >10μm) and single crystals, the tetragonality of the present powder is high, considering that the particle size is <100 nm and the crystallite size is of the order of 30 nm.

The densities are in the range 96.5 to 98.3% of the theoretical density, values comparable or better than the density of solid-state powders with lower $S_{BET}$ (of the order of 6-10 m²/g ), i.e. particle size >100 nm. Fine hydrothermal powders with $S_{BET}$ of 10-12 m²/g display densities of 88-97%.

The morphology of the powders corresponds to equiaxed particles with mean diameter comparable with the equivalent particle size calculated from $S_{BET}$. The size of the $BaTiO_3$ particles, even taking into account a volume increase of a factor about 2 (which corresponds to an increase of diameter of a factor about 1.25, is much larger than the size of the initial $TiO_2$ particles. The comparison of $d_{BET}$ and $d_{XRD}$ values (Table 3) indicates that the $BaTiO_3$ particles are polycrystalline and composed of dense aggregates of nanocrystals with size of ≈30 nm.

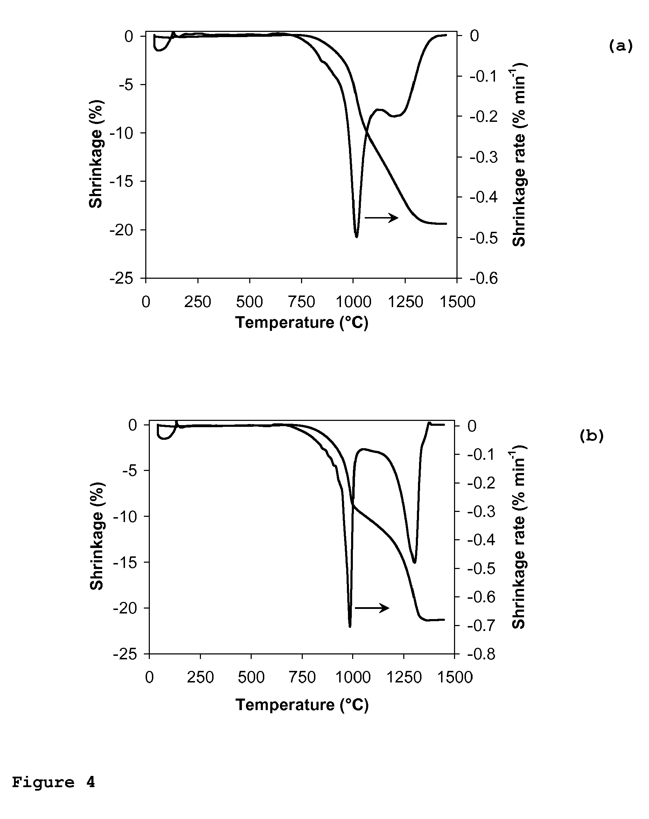

Sintering: The shrinkage and shrinkage rate of powder BT1 calcined for 2h at 800°C and powder BT2A calcined for 8h at 700°C are reported in Figure 4.

Figure 4 shows Sintering behaviour of (a) powder BT1 and (b) powder BT2A. The left and right y-axes report the shrinkage and the shrinkage rate, respectively.

Two sintering steps and, consequently, two minima in the shrinkage rate curve are observed. The first falls at 1020°C for BT1 and at 990°C for BT2A, The second one is located at 1210°C for BT1 and 1308°C for BT2A. For both powders sintering is terminated at about 1300°C. All the powders showed a good densification after 1h isothermal sintering at 1150°C with relative densities of 96% for BT1, 93% for BT2A. The microstructure of the final ceramics was quite homogeneous with an average grain size of $\approx 1$ $\mu$m.

The final ceramics displayed dielectric properties characteristic of high quality barium titanate. The Curie temperature was 123-126°C, the Curie-Weiss temperature was 106-108°C and the Curie constant was $1.4$-$1.6 \times 10^5$ K.

Dielectric loss tangent is, for all samples, $\approx 0.02$ at room temperature and $<0.05$ up to 160-170°C.

**Claims**

1. A method to produce a barium titanate powder having a BET surface area of 10 to 25 $m^2$/g comprising

    - mixing a barium carbonate powder having a BET surface area of 20 to 50 $m^2$/g and a pyrogenic titanium oxide powder having a BET surface area of 40 to 150 $m^2$/g in a ratio to form a powder mixture
    - milling the powder mixture,
    - calcining the powder mixture in a temperature range from 700°C to 800°C.

2. A method according to claim 1, **characterized in that** the primary particle distribution the pyrogenic titanium dioxide powder has a half width HW, in nanometers, of

$$\mathrm{HW} \ [\mathrm{nm}] \ = \ a \ \cdot \ \mathrm{BET}^{f},$$

   where $a = 670 \cdot 10^{-9}$ $m^3$/g and $-1.3 \leq f \leq -1.0$.

3. A method according to claim 1 or 2, **characterized in that** the BET surface area of the pyrogenic titanium dioxide powder is in a range from 40 to 60 $m^2$/g.

4. A method according to claim 1 or 2, **characterised in that** the BET surface area of the pyrogenic titanium dioxide is in a range from 80 to 120 $m^2$/g.

5. A method according to claim 1 to 4, **characterized in that** an aqueous dispersion of pyrogenic titanium dioxide powder is used.

6. A capacitor comprising the barium titanate obtained by the method according to claim 1 to 5.

Figure 1

Figure 2

Figure 3

(a)

(b)

Figure 4

Europäisches
Patentamt

European
Patent Office

Office européen
des brevets

# EUROPEAN SEARCH REPORT

Application Number

EP 08 10 3388

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 1 708 212 A (SAMSUNG ELECTRO MECH [KR]) 4 October 2006 (2006-10-04) * paragraphs [0040], [0043], [0044], [0048], [0049], [0051], [0058] - [0062] * | 1-5 | INV. C01G23/00 C04B35/468 H01G4/12 |
| Y | EP 1 683 763 A (TOHO TITANIUM CO LTD [JP]) 26 July 2006 (2006-07-26) * paragraph [0059]; examples 8-10 * | 1-5 | |
| X | WO 2006/025560 A (SHOWA DENKO KK [JP]; SHIRAKAWA AKIHIKO [JP]; YOKOUCHI HITOSHI [JP]) 9 March 2006 (2006-03-09) | 6 | |
| A | * page 7, line 19 - page 8, line 17; claim 26; figure 1; examples 3,8,11 * | 1-5 | |
| A | US 2006/280675 A1 (UMEDA TETSU [JP] ET AL) 14 December 2006 (2006-12-14) * the whole document * | 1-5 | |
| A | EP 1 130 004 A (MURATA MANUFACTURING CO [JP]) 5 September 2001 (2001-09-05) * example 1 * | 6 | TECHNICAL FIELDS SEARCHED (IPC) C01G C04B H01G |

The present search report has been drawn up for all claims

| Place of search | Date of completion of the search | Examiner |
|---|---|---|
| Munich | 5 November 2008 | Werner, Håkan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

Application Number

EP 08 10 3388

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

Application Number

EP 08 10 3388

The Search Division considers that the present European patentapplication does not comply with the
requirements of unity of invention and relates to severalinventions or groups of inventions, namely:

1. claims: 1-5

   A method for making barium titanate having a BET surface
   area of 10-25 g/m2.
                          - - -

2. claim: 6

   A capacitor comprising barium titanate having a BET surface
   area of 10-25 g/m2.
   Note: Claims for products defined in terms of a process of
   manufacture are admissible only if the product as such
   fulfil the requirements for patentability, i.e. inter alia
   that they are new and inventive. A product is not rendered
   novel merely by the fact that it is produced by means of a
   new process (Guidelines CIII, 4.12).
                          - - -

## ANNEX TO THE EUROPEAN SEARCH REPORT
## ON EUROPEAN PATENT APPLICATION NO.

EP 08 10 3388

This annex lists the patent family members relating to the patent documents cited in the above-mentioned European search report.
The members are as contained in the European Patent Office EDP file on
The European Patent Office is in no way liable for these particulars which are merely given for the purpose of information.

05-11-2008

| Patent document cited in search report | | Publication date | Patent family member(s) | | Publication date |
|---|---|---|---|---|---|
| EP 1708212 | A | 04-10-2006 | CN 1841588 A | | 04-10-2006 |
| | | | JP 2006273708 A | | 12-10-2006 |
| | | | KR 20060104058 A | | 09-10-2006 |
| | | | US 2006221550 A1 | | 05-10-2006 |
| EP 1683763 | A | 26-07-2006 | WO 2005033009 A1 | | 14-04-2005 |
| | | | KR 20060088893 A | | 07-08-2006 |
| | | | TW 263621 B | | 11-10-2006 |
| | | | US 2007081938 A1 | | 12-04-2007 |
| WO 2006025560 | A | 09-03-2006 | CN 101048345 A | | 03-10-2007 |
| | | | JP 2006096652 A | | 13-04-2006 |
| | | | KR 20070050973 A | | 16-05-2007 |
| | | | TW 290539 B | | 01-12-2007 |
| | | | US 2008145292 A1 | | 19-06-2008 |
| US 2006280675 | A1 | 14-12-2006 | WO 2004096712 A1 | | 11-11-2004 |
| EP 1130004 | A | 05-09-2001 | CN 1311173 A | | 05-09-2001 |
| | | | DE 60101641 D1 | | 05-02-2004 |
| | | | DE 60101641 T2 | | 17-06-2004 |
| | | | JP 3780851 B2 | | 31-05-2006 |
| | | | JP 2001316114 A | | 13-11-2001 |
| | | | KR 20010087238 A | | 15-09-2001 |
| | | | TW 248924 B | | 11-02-2006 |
| | | | US 2001026865 A1 | | 04-10-2001 |

EPO FORM P0459

For more details about this annex : see Official Journal of the European Patent Office, No. 12/82